(19) Europäisches Patentamt / European Patent Office / Office européen des brevets

(11) **EP 2 930 854 B1**

(12) **EUROPEAN PATENT SPECIFICATION**

(45) Date of publication and mention
of the grant of the patent:
**20.05.2020  Bulletin 2020/21**

(51) Int Cl.:
*H04B 1/10* *(2006.01)*          *H04B 1/525* *(2015.01)*

(21) Application number: **15161411.2**

(22) Date of filing: **27.03.2015**

(54) **UNWANTED COMPONENT REDUCTION SYSTEM**

SYSTEM ZUR REDUZIERUNG UNERWÜNSCHTER KOMPONENTEN

SYSTÈME DE RÉDUCTION DE COMPOSANT INDÉSIRABLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.04.2014  GB 201406346
29.10.2014  US 201414527608**

(43) Date of publication of application:
**14.10.2015  Bulletin 2015/42**

(73) Proprietor: **Analog Devices Global Unlimited
Company
Hamilton (BM)**

(72) Inventor: **Pratt, Patrick**
**Norwood, MA Massachusetts 02062 (US)**

(74) Representative: **Thompson, Andrew John
Withers & Rogers LLP
4 More London Riverside
London SE1 2AU (GB)**

(56) References cited:
**EP-A2- 1 267 496          WO-A1-02/093807
US-A- 5 271 038          US-A1- 2008 039 045
US-A1- 2009 086 864**

## Description

### TECHNICAL FIELD

This disclosure relates to an apparatus for and method of estimating a unwanted, often non-linear, component in a signal, and using the estimate to reduce the impact of the non-linear component.

### BACKGROUND

In radio receivers, a received radio frequency (RF) signal is amplified and demodulated. This process often includes a frequency translation operation where the incoming signal is mixed with a locally generated signal. This enables subsequent amplification stages to be performed over a narrower pass band. This makes it easier to build amplifiers and other components with acceptable levels of distortion, noise and power consumption characteristics. Despite these operations, non-linearity may still exist within the RF signal processing path and/or the baseband signal processing path. The non-linearity may result from the performance of real world transistors as opposed to ideal ones, or charging and discharging of explicit or parasitic capacitors in signal processing elements, such as analog to digital converters, giving rise to non-linearity.

WO02/093807 A1 discloses a radio receiver and apparatuses and methods to reduce interference in signals subject to intermodulation products and high power narrow band interfering signals on low power wideband signals.

US2008/0093015 A1 discloses techniques for detecting and mitigating intermodulation distortion. In particular this document discloses a device that correlates digital intermodulation distortion with an input signal and determines intermodulation distortion in the input signal based on correlated results.

US2009/0086864 A1 discloses techniques for detecting and mitigating interference. In particular, this document discloses a device that senses interference levels and digitally reconstructs suspected interference in the received signal.

### SUMMARY OF CERTAIN INVENTIVE ASPECTS

In some applications, such as radio telephony base stations, low power consumption, selectivity, linearity and small size are desirable.

It is desirable to provide increasing amounts of RF receiver architecture within a single integrated circuit package, and preferably on a single semiconductor die.

It is also desirable to provide a receiver that is operable to cover a plurality of modes and/or frequency bands.

It is also desirable to provide solutions where the customer can operate a device without detailed knowledge of how to operate the device.

The present disclosure relates to a RF receiver system in which certain embodiments address some, and preferably all, of the above objectives.

The present invention is defined by the features of appended independent claims.

According to a first aspect of this disclosure, there is provided an apparatus according to claim 1.

The unwanted signal component may be a narrow band signal or a broadband signal. When the unwanted signal is a narrowband signal, the apparatus may identify the narrowband unwanted signal and seek to minimize its influence on the output signal. By creating a correction signal that is primarily intended to cancel only the selected narrowband unwanted signal, it becomes computationally easier to create a correction signal that is effective at reducing the impact of the unwanted signal component.

The unwanted signal component may be generated as the result of non-linearity in a signal processing circuit giving rise to the generation of harmonic terms. The apparatus may deliberately apply equivalent non-linear processing to the input signal. Such non-linear processing may include forming the square of the input signal, the third power of the input signal and so on.

The non-linearity may be estimated at a narrow or nominally a single frequency. If, for example, the pass band of a signal processing circuit, such as a radio receiver, coupled to the input of the signal processing apparatus included a wanted signal centered around frequency $F_W$ and a "blocker" centered around FB, then the signal processing circuit may be arranged to estimate a correction signal for the second harmonic $2F_B$ of the blocker signal. This may improve recovery of the wanted signal at $F_W$ when $F_W$ is substantially the same as $2F_B$.

The signal processing circuit may estimate coefficients to be applied to the estimate of the unwanted signal to generate a correction signal. The correction signal may be generated by passing the estimated error signal through a filter. The filter may be finite impulse response (FIR) filter.

Frequency translation of the unwanted frequency component may be performed in order to allow the filter to operate at a nominally constant frequency. Therefore, the filter taps and coefficients may remain the same when the apparatus is in use. Given that all of this signal processing may be done in the digital domain, i.e., frequency translation by multiplying with a repetitive waveform and filtering, the designer might choose to omit the frequency translation and instead retune the digital filter.

The pressures to provide multi-mode and multi-frequency receivers are found in a number of operating environments. An example of such an environment is the mobile telephony space where devices may receive signals operating at one of a plurality of standards, such as 2G, 3G, 4G, LTE and so on.

Each of these standards (or other standards in other communications systems) tends to be highly regulated, for example, in terms of required acceptance bandwidth, sensitivity, immunity to interfering signals and so on.

According to a further aspect of this disclosure, there is provided an integrated circuit according to claim 8.

According to a further aspect of this disclosure, there is provided a receiver according to claim 9.

The unwanted signal component may be or comprise a power term $x^n$ in a signal processing circuit that is connected to the apparatus, and the first processor is configured to apply the function $x^n$ to the input signal. Thus the first processor may be configured to form the square of the input signal, or it may be configured to form a polynomial expansion of the input signal

Advantageously the correction signal generator comprises a finite impulse response filter.

The apparatus may include filters configured to select the estimated unwanted signal and at least one of a residual unwanted signal from the output or the unwanted signal in the input signal, and to provide the selected signals to the second processor. Advantageously the second processor is adapted to form auto-correlation functions of the output of the first processor and cross correlations of the output of the first processor and at least one of the input signal or the output signal as part of the parameter identification

Preferably the correction signal generator comprises a digital filter arranged to receive an input from the first processor. The correction signal generator and the combiner may be implemented together.

In some embodiments of this disclosure the unwanted signal is a harmonic of a first signal, and the apparatus includes an analyzer configured to locate the frequency of the first signal. The analyzer may include an N point FFT engine when N<8 and N is a positive integer, or a FFT engine where N is less than or equal to 4.

Alternatively, the analyzer may comprise a parametric engine.

According to a further aspect of this disclosure, there is provided a method according to claim 13.

## BRIEF DESCRIPTION OF THE DRAWINGS

Embodiments of a signal processing system for reducing the impact of an unwanted component in accordance with this disclosure will now be described, by way of non-limiting example, with reference to the accompanying drawings in which:

Figure 1 is a block diagram of a receiver operating at zero intermediate frequency;

Figure 2 is a block diagram of a receiver that is configured to operate at a low intermediate frequency;

Figure 3 schematically illustrates the transformation of a spectrum at the input of a receiver, in which the frequencies are referenced to a local oscillator, with the spectrum at to output of the receiver as a result of non-linearity within the receiver;

Figure 4 is a measured frequency response from a receiver where a large blocker is present and its second harmonic substantially coincides with a signal that it is desired to be received;

Figure 5 is a schematic diagram of a signal processing system for reducing an unwanted harmonic signal arising from a blocker;

Figure 6 shows components of the signal processor of Figure 5 in greater detail;

Figure 7 shows components of an adaptation engine of Figure 6 in greater detail;

Figure 8 shows the narrowband filters of the adaptation engine of Figure 7 in detail;

Figure 9 shows further features of the adaptation engine of Figure 7 in greater detail;

Figure 10 shows the operation of the correlation engine of Figure 9;

Figure 11 shows the operation of the matrix and vector build engine of Figure 9;

Figure 12 shows the operation of the least squares engine of Figure 9;

Figure 13 is a schematic diagram of a circuit operable to search for blocker signals or components resulting from the presence of a blocker signal;

Figure 14 shows the apparatus of Figure 13 in greater detail;

Figures 15a to 15c show an example of a frequency search;

Figure 16 is a schematic diagram of a parametric engine that can be used to identify a blocker signal;

Figure 17 shows an embodiment of a first order parametric engine; and

Figure 18 shows the circuit of Figure 17 in association with a controller for providing timing and control signals.

## DETAILED DESCRIPTION OF CERTAIN EMBODIMENTS

There is generally an advantage in moving away from traditional high intermediate frequency heterodyne receiver architectures, such as in mobile telephony systems, as with an increasingly crowded frequency spectrum it can be increasingly difficult to find a suitable place to locate the intermediate frequency signal where the spectrum is 'quiet'.

Many radio receiver systems are moving towards low intermediate frequency or zero intermediate frequency architectures.

Such approaches enable integrated circuit providers to provide or propose integrated circuits where quadrature mixers, variable gain amplifiers, filters and analog to digital converters are provided on a single integrated circuit. Furthermore, digital domain signal processing can also be provided on the chip/integrated circuit to process the output of an analog to digital converter. The local oscillator for such a system may be provided 'on chip' as well, i.e., within the same circuit package.

Such an integrated circuit can offer reduced cost through integration; greater ease of use for a customer as it moves closer to a system-on-chip style solution; and/or relaxation of RF signals processing and routing specifications and simplification of frequency planning. This is particularly relevant where several receivers are provided in close proximity.

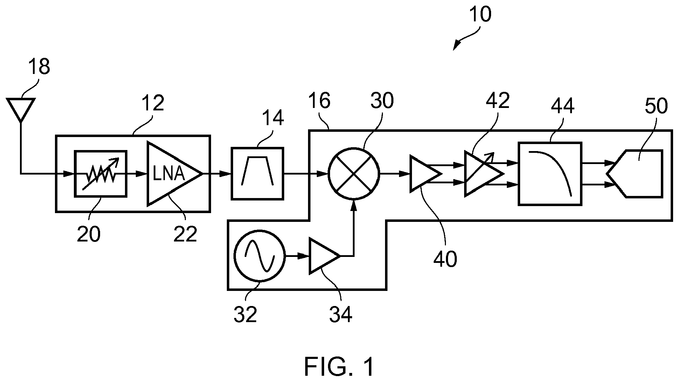

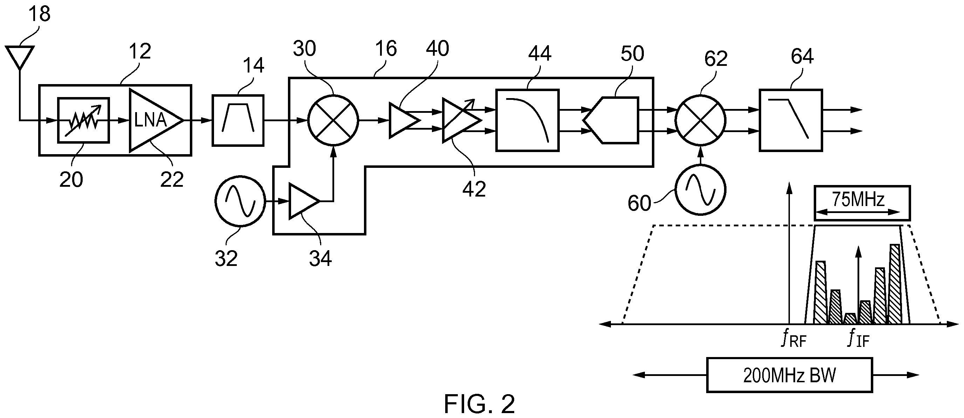

The architectures of direct conversion receivers and low IF (intermediate frequency) receivers are similar. Figure 1 is a schematic block diagram of a direct conversion receiver, and Figure 2 is a schematic block diagram of a low IF receiver.

The direct conversion receiver, generally designated 10 in Figure 1, broadly comprises three functional blocks. As illustrated, the direct conversion receiver 10 of Figure 1 comprises an RF amplification stage 12, a filter 14 and a down-converter 16. The RF amplification stage 12 receives a signal from an antenna 18 and provides a controllable gain, represented in Figure 1 by a variable attenuator 20 and a low noise amplifier 22. The output from the RF amplification stage 12 is band pass filtered, for example, by a surface acoustic wave (SAW) filter 14. Other filter technologies may alternatively or additionally be used. An output of the filter 14 is provided to a RF input of the down-converter 16.

The down-converter 16 comprises a quadrature mixer 30 which receives the amplified RF input signal at a mixer signal input, and mixes this with local oscillator (LO) signals supplied to local oscillator inputs of the mixer 30. The local oscillator signal(s) are provided by a local oscillator 32. The local oscillator 32 may be provided as an integrated component (in the same integrated circuit package as the mixer 30) or as a separate component. The output of the local oscillator 32 may be buffered by a buffer or amplifier 34 prior to being supplied to the mixer 30. As is known to the person skilled in the art, a quadrature mixer 30 typically comprises two mixers, one to work on an in-phase signal (or I channel) and one to work on signals whose phase is shifted by $\pi/2$ radians (90 degrees) relative to the in-phase signal, the quadrature channel (or Q channel). To achieve this, the LO signal from the local oscillator 32 can be generated as two LO signals of the same frequency but offset by 90 degrees, or the local oscillator signal can subsequently be processed to generate the two phase shifted local oscillator signals desired by a quadrature mixer 30. In real world systems, the I and Q channels are typically approximately 90 degrees out of phase without each other and may not be exactly 90 degrees out of phase.

If the incoming signal has a carrier frequency of $W_C$ (whether the carrier actually exists or has been wholly or partially suppressed), then the local oscillator signal can also be set to $W_C$ so that direct down conversion to DC/baseband is performed.

Local oscillator signals of the desired frequency can be derived using phase locked loops and the like as known to the person skilled in the art.

The I and Q channels from the mixer 30 may then be subjected to further gain, for example by a fixed gain amplifier 40 and a variable gain amplifier 42, before being low pass filtered by a filter 44 to remove out of band interference, and then sent to an analog to digital converter 50 to digitize the I and Q channels.

The low IF receiver of Figure 2 has similarities with the direct conversion receiver of Figure 1, and like parts have been shown using like reference numbers. Conceptually, the low IF receiver has two local oscillators. A first local oscillator 32 can be set to a frequency $W_L$ such that mod $(W_C-W_L)$ = IF, where IF is a desired intermediate frequency. A second local oscillator can be provided to generate a second local oscillator frequency to enable a second mixer 62 to downconvert the signals to baseband prior to being passed through a low pass filter 64.

However, since the I and Q signals have been digitized by the ADC 50, the operations of second local oscillator frequency generation and mixing end filtering can all be performed digitally.

Thus, both functions can be performed by combined digital circuits.

Figure 2 includes a graph showing the frequency spectrum available at the output of the ADC 50. In a direct conversion receiver as disclosed here, the "baseband" may have a bandwidth of around 200 MHz. For multichannel GSM, a bandwidth of about 75 MHz is desired. Thus, the first local oscillator 32 can be set to give a nominal first intermediate frequency inside the pass band, for example at about 150 MHz, and the second local oscillator 60 can act to down convert that to baseband.

A desirable feature of a receiver is its ability to deal with the presence of a relatively strong interfering signal. An example of such a specification is the 3GPP TS 51.021 blocker test. In this test, a local blocking signal is introduced into the receiver with a strength of - 1 dBFS (one dB less than full scale signal strength). Any harmonics from mixing the blocker signal with the local oscillator signal should be at least 90 dB down on the blocker power, as part of the test specification. Non-linearities resulting in mixing or amplification stages can be regarded as RF non-linearities. Any non-linearity as a result of baseband components, such as the ADC 50, can be regarded as a baseband non-linearity. RF non-linearities and/or baseband non-linearities can be reduced and/or eliminated using embodiments of the apparatus disclosed here.

In the following description, the focus will be on reducing 2$^{nd}$ order baseband non-linearity for illustrative purposes. Such a baseband non-linearity may be modelled as $I^2(n - m) + jQ^2(n - m)$, where n is a sample index and m is a positive integer delay (e.g., m = 0, 1, 2, etc.). It will be understood that the principles and advantages discussed herein can be applied to reduce or eliminate other non-linearities.

If the apparatus was targeting a RF non-linearity of order, say k, then a suitable non-linearity model may include terms of the form $|I(n-m1) + jQ(n-m1)|^{\wedge}(2k-1)*(I(n-m2) + jQ(n-m2))$.

A feature of using CMOS is that digital gates are relatively inexpensive and can be fabricated to perform additional processing of the signal from the ADC 50. This can be exploited to correct impairments of the RF or analog components, and/or to remove interference received at the antenna 18.

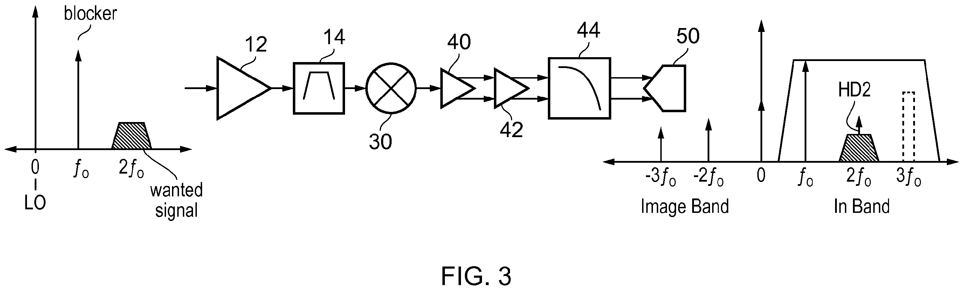

For example, a significant blocking signal can be observed in a mobile telephony system. Such an arrangement is schematically illustrated in Figure 3, where all frequencies are shown referenced to the local oscillator frequency. The signal of interest, e.g., a signal associated with a telephone call, may occupy a frequency band centered around $2f_0$. In a worst case scenario, the blocker happens to occur at a frequency $f_0$. In this worst case scenario, the actual frequencies of the blocker and the signal of interest are LO+$f_0$ and LO+$2f_0$ respectively.

If some part of the signal processing chain, be that the mixer 30, the amplifiers 40 and/or 42 or the ADC 50 exhibits second harmonic distortion, then this gives rise to harmonic generation.

If the local oscillator frequency $f_{LO}$ over time is represented as

$$f_{LO} \quad = \quad COS\ (2\pi f_{L0}t)$$

and the frequency of the blocker $F_{BLOCK}$ over time is represented as

$$f_{BLOCK} \quad = \quad COS\ (2\pi f_{LO}+f_0)t$$

then it can be shown that a harmonic of the blocker occurs at +$2f_0$ and at -$2f_0$ with respect to the local oscillator frequency $f_{LO}$. Thus, in this example, the blocker 2nd harmonic sits over the wanted signal which occurs at 2fo in the baseband.

However, the blocker second harmonic which may be known as 'HD2' by those skilled in the art is related to the blocker. If the relationship between the blocker second harmonic and the block can be estimated, then the blocker signal can be used to estimate a correction signal to reduce the second harmonic signal HD2, or indeed any desired harmonic of the blocker.

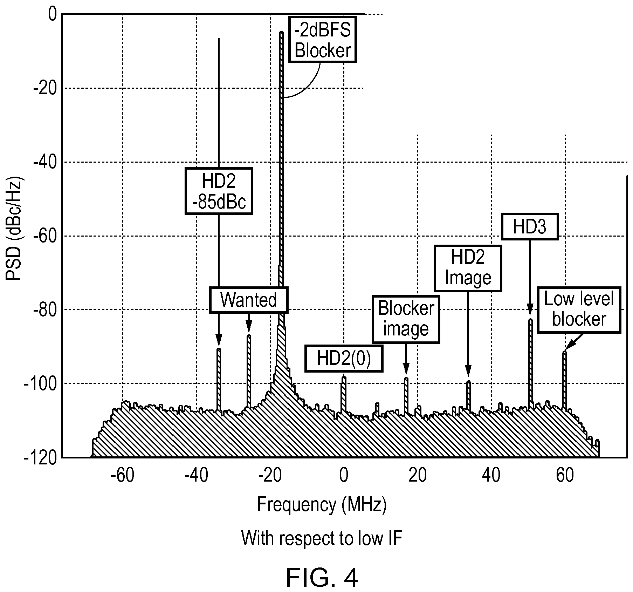

Figure 4 is a spectral diagram for a known low IF conversion receiver and ADC. The frequencies are shown with respect to the intermediate frequency which may typically be in the region of 75 MHz to 100 MHz. In Figure 4, a blocker with a signal strength of -2 dBFS occurs at -18 MHz compared to the intermediate frequency (assuming that the local oscillator is on the low side of the incoming frequency). Second order harmonic distortion gives rise to harmonics at -36 MHz, and +36 MHz compared to the intermediate frequency. A blocker image occurs at +18 MHz compared to the intermediate frequency and a third harmonic labelled HD3 appears at +54 MHz but does not appear at -54 MHz. This is a real artefact resulting from intermodulation between the various frequencies.

Because the frequencies are shown with respect to the intermediate frequency the spectrum in Figure 4 runs from IF-65 MHz to IF+65 MHz. If, for numerical convenience the intermediate frequency, IF, was 100 MHz, then the spectrum would extend between 35 MHz and 165 MHz.

This allows for relatively convenience selection between those frequency components in the in-band range of -60 MHz to -5 MHz compared to the intermediate frequency (i.e., +40 MHz to +95 MHz) and those components that are in an image band of +5 to +60 MHz compared to the intermediate frequency (i.e. 105 MHz to 165 MHz).

In this example, the measured in band second harmonic signal (HD2) had a power which is about 85 dB less than the blocker.

It should be noted that, in general, the output y of the ADC (or other signal processing components) in response to a signal x can be represented as

$$y = a_0 + a_1 x + a_2 x^2 + a_3 x^3 + a_4 x^4 \ldots$$

In this equation, $a_0$, $a_1$ $a_2$, $a_3$, $a_4$, etc. are coefficients in a polynomial expansion representing the relative contribution of each of the polynomial terms to the output y. Distortion relating to any of these terms $a_2 x^2$, $a_3 x^3$, etc., and/or from intermodulation products may be estimated and reduced. However, as in the example given so far, the main source of distortion can be second order harmonic distortion. Accordingly, this case will be considered further.

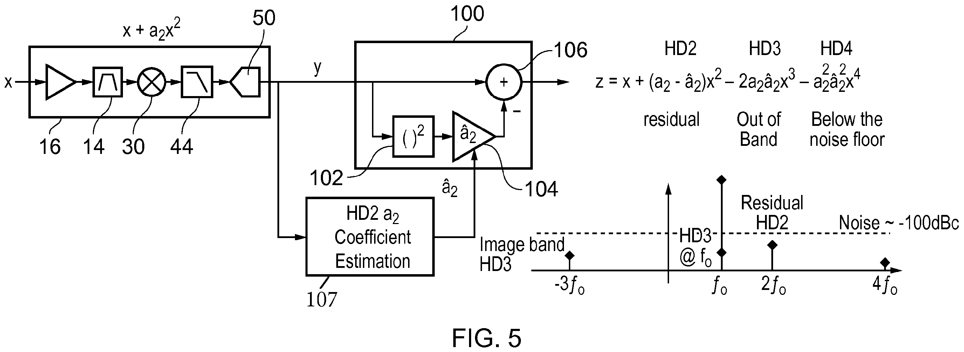

Figure 5 shows a schematic representation of an apparatus that includes a second harmonic reducer 100 comprising a squarer 102, a correction signal generator 104 and an adder 106. It will be understood that reducers configured to suppress unwanted signals at other frequencies, such as other harmonics, can alternatively or additionally be implemented. Given that the second harmonic reducer 100 acts (in this example) on the digitized output of the ADC 50, then the squarer 102 can be implemented in hardware as a two input digital multiplier. The squarer 102 can serve as a first processor configured to process the output y of the ADC 50 by operating on the output y with a function that includes a term descriptive of the unwanted signal component to create an estimated unwanted signal. The output of the squarer 102 is provided to the correction signal generator 104, which receives an estimated correction coefficient $\hat{a}_2$. The apparatus can include a coefficient estimation circuit 107 configured to generate the estimated correction coefficient $\hat{a}_2$ based on the output y of the ADC 50. The coefficient estimation circuit 107 can serve as a second processor configured to process the estimated unwanted signal from the first processor and at least one of the output y from the ADC 50 or the output signal Z of the second harmonic reducer 110 to identify one or more parameters to apply to the estimated unwanted signal to generate a correction signal. The coefficient estimation circuit 107 can include a blocker detection engine and an adaptation engine, for example, as discussed below. A combiner, such as the adder 106, can combine the output of the ADC 50 and a correction signal from the correction signal generator 104 to form an output signal Z such that an influence of the unwanted signal component in the output signal Z is reduced. The sign of $\hat{a}_2$ can be negated such that adding the output of the correction signal generator 104 to the corresponding digital word from the ADC 50 at adder 106 forms a further output Z represented by the following equation:

$$Z = y + (a_2 - \hat{a}_2)y^2$$

Further analysis would show a third harmonic HD3 = $-a_2 \hat{a}_2 x^3$ out of the pass band and a fourth order harmonic HD4 = $-a_2^2 \hat{a}_2^2 x^4$ below the noise floor of the receiver.

The residual amount of the second harmonic can depend on the accuracy of estimation of $\hat{a}_2$ to reduce $a_2 - \hat{a}_2$.

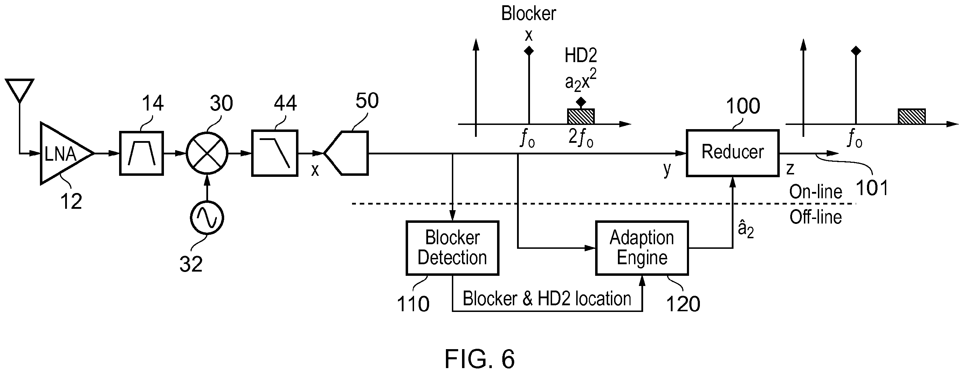

Figure 6 is a block diagram of a second harmonic reduction circuit (or "reducer") in association with a radio receiver, as might be found in a mobile receiver or a base station.

The second harmonic reducer 100 is associated with a blocker detection engine 110. The blocker detection engine 110 may be implemented in dedicated hardware, by a processor executing instructions stored in non-transitory computer-readable storage, or a combination of the same. The blocker detection engine 110 is connected to an adaptation engine 120, which may be implemented in dedicated hardware, by a processor executing instructions stored in non-transitory computer-readable storage, or a combination of the same.

The reducer 100 can run continuously while the ADC 50 is outputting data, whilst the blocker detection engine 110 and the adaptation engine 120 can be run intermittently. The output Z of the reducer 100, which represents the input data stream with a reduced unwanted signal component, is provided at output 101.

The correction signal generator 104 (Figure 5) may be implemented as a buffer or delay line for maintaining a record of the most recent output N output words from the ADC 50. The second harmonic reducer 100 works on the in-phase and quadrature signals. Many responses or transfer characteristics may be implemented in the second harmonic reducer 100, which can be analogous in its construction to a finite impulse response (FIR) filter comprising M delay elements, such that an output p of the filter is represented by the following equation:

$$ \mathrm{p} = \sum_{m=0}^{M} \left\{ \mathrm{Re}\{\hat{a}_2(m)\} + j\,\mathrm{Im}\{\hat{a}_2(m)\} \right\} \left\{ I^2(n-m) + jQ^2(n-m) \right\} $$

and the output z of the signal processor is represented by the following equation:

$$ z(n) = y(n) - a(n) \otimes \left\{ I^2(n) + jQ^2(n) \right\} $$

where $a$ represents the filter coefficients.

The designer has a choice of the number of taps or delay stages M that he implements, but M can be unexpectedly small if desired. In simulation, and subsequently in experimentation, it was found that M=2 or 3 could give sufficient performance within a mobile telephony system to adequately address baseband non-linearity. However, other circuits or corrections may desire more taps.

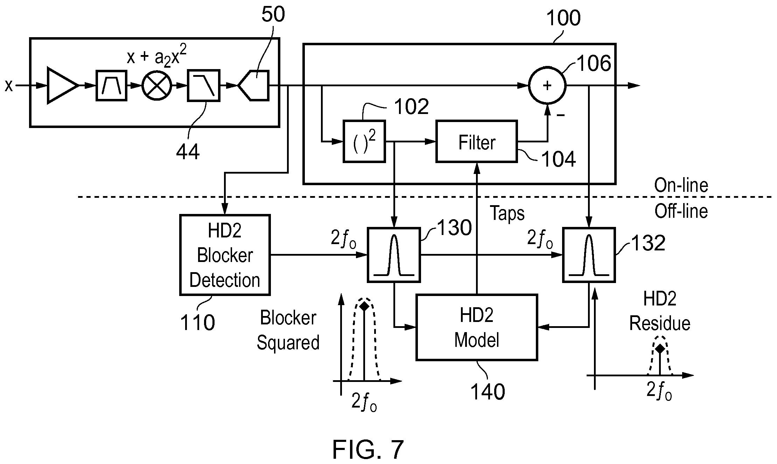

As noted before, the second harmonic reducer 100 is responsive to an adaptation engine 120, an embodiment of which is shown in greater detail in Figure 7.

As illustrated in Figure 7, the adaptation engine 120 comprises tunable narrow band filters 130 and 132, which are controlled by a blocker detection engine 110, which will be described in greater detail later. The blocker detection engine 110 can set the centerband of the filters 130 and 132 at the frequency of the second order harmonic HD2.

The input signal to the correction signal generator 104 and the output of the summer 106 are therefore filtered to extract the second harmonic terms of the blocker, and this information is used to update the coefficients used in a HD2 model circuit 140 of the adaption engine 120 to set the coefficients to be applied to the taps of the correction signal generator 104. In Figure 7, the correction signal generator 104 is illustrated as a filter. The correction signal generator 104 can be a finite impulse response (FIR) filter in certain embodiments. Such a filter can operate on both the I and Q channels, and may be a complex FIR filter (that is the filter receives both real and imaginary coefficients).

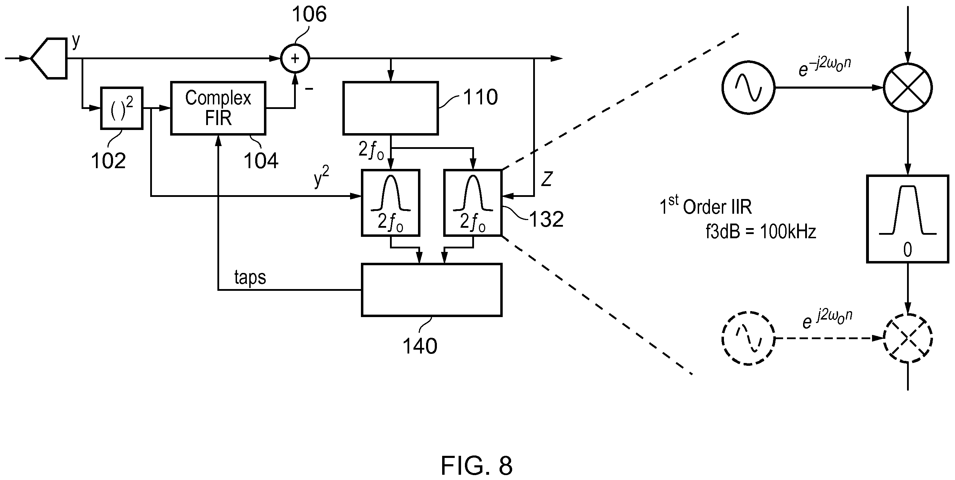

Assuming that the frequency of the blocker signal can be estimated, then a narrow band filter can be formed by multiplying the digitized output of the ADC 50 with a filter signal having a fundamental frequency matched or substantially matched to the frequency of the second harmonic HD2 in the base band that arises from the blocker frequency. The filter signal can be formed as a digitally generated sinusoid (which may be represented as a complex number) and the multiplication, and hence mixing, can be performed in the digital domain. In some embodiments the filter signal can be implemented as a nominal square wave having magnitudes of +1 and -1. This can allow the down conversion to be performed by a cyclical inversion of a sign bit. This multiplication and down conversion to DC is schematically illustrated in Figure 8.

The second harmonic HD2 (e.g., an I + jQ vector of samples corresponding to the signal content at the frequency HD2, in which j represents the square root of negative one) is therefore down converted to DC or near DC values and then filtered by narrow band filters 130 and 132. The narrow band filters 130 and 132 may be implemented as infinite impulse response filters, which can be arranged to give narrow band filter responses with only a few delay stages.

Notionally the filtered signal should be up converted back to HD2 by a further multiplication by the filter frequency, but the inventor realized that instead of the further multiplication, the filter signal can be converted back to HD2 in a matrix and vector processing operation that can be performed periodically as opposed to continuously and in real time.

The adaptation engine 120 may be implemented in any suitable dedicated hardware and/or by a processor configured to execute instructions stored in non-transitory computer-readable storage. An example of the adaptation engine 120 will now be described.

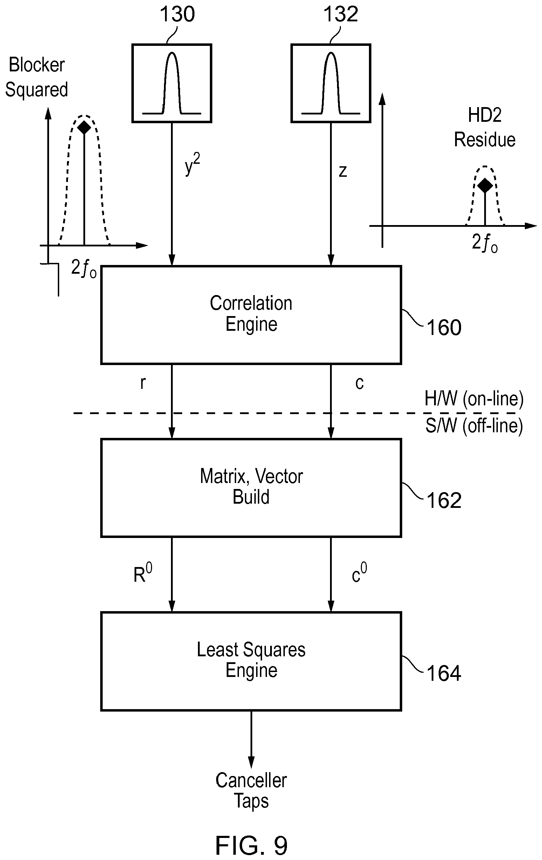

The adaptation engine 120 may be implemented in three sub-systems, as shown in Figure 9. The sub-systems may comprise a correlation engine 160, a matrix and vector build engine 162 and a least squares engine 164.

The correlation engine 160 may comprise a buffer or memory so as to hold N samples. In hardware, the buffer may be implemented as an N stage shift register. Alternatively, the correlation engine can dispense with a buffer and process the sequence of samples as they arrive one by one.

Each buffered value or sample may be provided to a plurality of multipliers and summers arranged to form the desired autocorrelation and cross correlation functions.

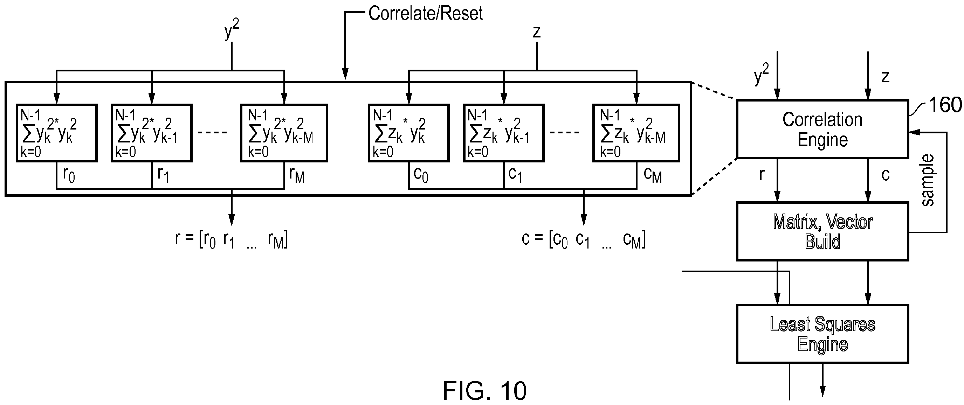

Thus, as shown in Figure 10, the values from buffer can be supplied to a series of multiplier and summers arranged to form auto-correlation products $r_0$ to $r_m$

$$r_0 \quad = \quad \sum_{K=0}^{N-1} y_K^{2*} y_K^2$$

$$r_1 \quad = \quad \sum_{K=0}^{N-1} y_K^{2*} y_{K-1}^2$$

$$r_2 \quad = \quad \sum_{K=0}^{N-1} y_K^{2*} y_{K-2}^2$$

and so on up to

$$r_m \quad = \quad \sum_{K=0}^{N-1} y_K^{2*} y_{K-m}^2$$

where * represents a complex conjugate
n represents the number of samples in the buffer
m represents the number of taps/delay stages in the FIR filter

Similarly, the cross correlation products can be formed by dedicated hardware (or by a processor configured to execute instructions stored in non-transitory computer-readable storage) configured to process the N samples to calculate cross-correlation coefficients $c_0$ to $c_m$

$$c_0 \quad = \quad \sum_{K=0}^{N-1} z_K^{*} y_K^2$$

$$c_1 \quad = \quad \sum_{K=0}^{N-1} z_K^{*} y_{K-1}^2$$

$$c_2 \quad = \quad \sum_{K=0}^{N-1} z_K^{*} y_{K-1}^2$$

and so on.

The output of the correlation engine 160 is an auto-correlation vector **r** and a cross correlation vector **c** where

$$\mathbf{r} \quad = \quad [r_0, r_1, r_2 \ldots r_m]$$

$$\mathbf{c} \quad = \quad [c_0, c_1, c_2 \ldots c_m]$$

As shown in Figure 10, the correlation engine 160 is responsive to an instruction to sample the most recent N instructions, here labelled 0 to N-1, in response to signals from the matrix and vector build engine 162. The sampling and vector build can be performed by the vector build engine 162 relatively infrequently. For instance, such sampling and vector building may be done once per slot in a GSM system.

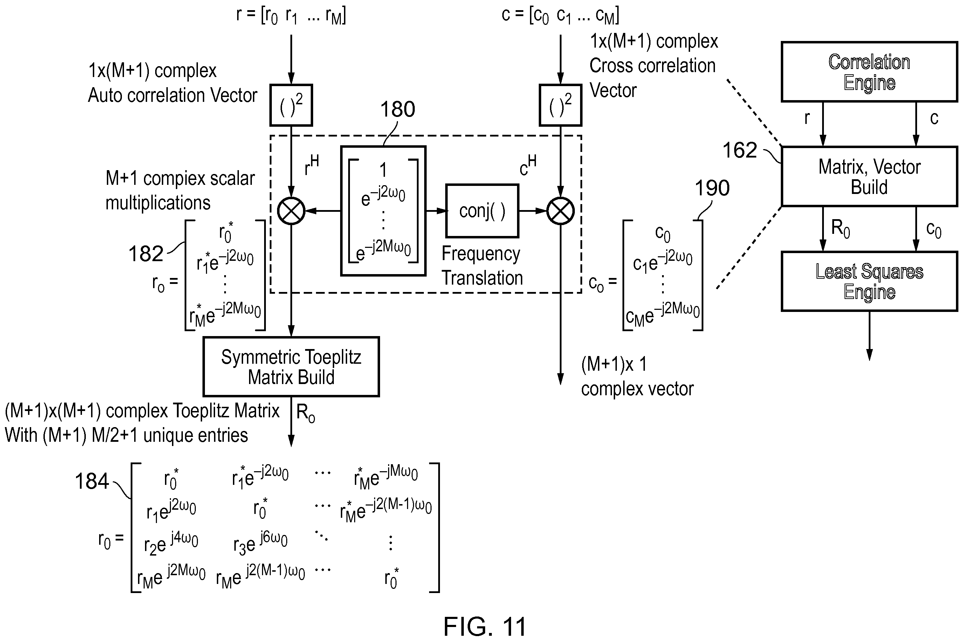

Figure 11 schematically illustrates the operations undertaken in the matrix and vector build engine 162.

As shown in Figure 11, the matrix and vector build engine 162 receives the autocorrelation vector **r** and cross correlation vector **c**. The matrix and vector build engine 162 can operate on the received vectors to form respective Hermitian matrices (also known as self-adjoint matrices) where an element in the $I^{th}$ row and $J^{th}$ column of the matrix is equal to the complex conjugate of the element in the $J^{th}$ row and $I^{th}$ column of the matrix for all indices I and J. Hermitian matrices have eigenvalues that are always real. The Hermitian matrices are then frequency transposed by multiplication with respective complex scalar functions. At block 180, the frequency translation vector is defined as $[1, e^{-j2\omega_0} \ldots e^{-j2M\omega_0}]$.

The frequency translation vector 180 is multiplied with the autocorrelation Hermitian matrix $\mathbf{r}^H$ to form a vector $\mathbf{r_0}$ designated 182 in Figure 11, and then built into a Toeplitz matrix, represented by matrix 184 in Figure 11. Similarly, the frequency translation vector 180 is used to operate on the cross correlation products, but here its complex conjugate is formed and this is multiplied with the Hermitian matrix of the cross correlation products to form vector $\mathbf{c_0}$, designated 190. The frequency translation operation resulting from use of the frequency translation vector takes the place of the up-conversion discussed with respect to Figure 8, and allows a real-time complex multiplication to be replaced with a relatively low rate (e.g., around once per millisecond) offline calculation.

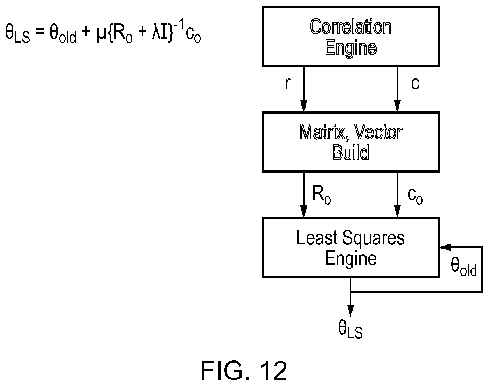

The vector $\mathbf{c_0}$ and the matrix $\mathbf{r_0}$ are then passed to the least squares engine 164, which performs an iterative estimate of the filter coefficients by updating old values of the filter coefficients with correction values formed by inverting the regularized autocorrelation matrix $\{r_0 + \lambda I\}$ where $\lambda$ (lambda) is a scalar real constant and I is the identity matrix of dimension M+1, and premultiplying this inverse by the cross correlation vector $c_0$, and the result being scaled by a real positive scalar value $\mu$ as shown in Figure 12. The value of $\mu$ allows the rate of convergence to be controlled so as to maintain stability. Such a technique is well known to the person skilled in the art and available via standard numerical packages, such as Matlab, and also in libraries for use with embedded systems.

Having estimated new coefficients from the least squares fitting with the least squares engine 164, these are then provided to the second harmonic reducer 100 in order to reduce the second harmonic interference.

In tests, the system has been shown to work very well even when the wanted signal and the second harmonic are superimposed in the frequency space. Under such conditions, the wanted signal is uncorrelated to the second harmonic HD2, and therefore could be regarded as noise or interference that the adaptation algorithm has to overcome, thus the wanted signal actually retards but does not prevent convergence of the adaptation algorithm. In tests, HD2 was set to have a power of approximately -85 dBFS (-110 dBm) whereas the wanted GSM signal (or other communications signal) might have a power between -101 dBM to -88.5 dBm. Thus, this gives an adaption signal to a noise ratio of -21.5 dB to -9 dB. In testing, this approach has been able to achieve a cancellation gain of better than 10 dB. This was achieved with filters having M = 4, thus such filters are relatively short and easy to implement in hardware, and simulation work suggests that M can be reduced to unity.

The technique described here can be used to reduce distortion resulting from non-linearity in receivers, such as the introduction of a square term as a result of operation of the analog to digital converter. However, the approach is "blind" to the source of the distortion. Thus, it is also applicable to reduce blocker signals that originate from outside of the receiver, as might be encountered if a "rogue" transmitter, such as a mobile telephone handset which is not performing within its design limitations and is generating out of channel signals that drown out adjacent channels. When using this technique to address RF non-linearities, it is not limited to only 2nd order harmonics, but can also deal with 3rd, 4th, 5th and so on order effects.

Returning to Figure 6, part of the adaptation process involves identification of the blocker signal. The blocker signal was shown in Figure 4 as being the strongest signal peak in the passband at the output of the analog to digital converter 50. For simplicity, only one blocker is shown, but in reality there may be several signals which are potentially the blocker, although one will almost inevitably be stronger than any of the others and this primary blocker is the signal which can be located and corrected for. As is known to the person skilled in the art, the presence of such a signal can be located by frequency analysis techniques, such as the use of Fourier transforms. Such techniques may be used here. However, for the sake of completeness, two iterative techniques which are the subject of U.S. Patent Application No. 14/517,447, filed October 17, 2014, will be described here.

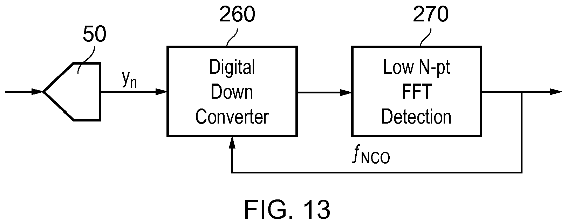

Figure 13 is a block diagram of a signal processing system arranged to find a dominant signal, such as a blocker signal or HD2 component within a bandwidth limited signal.

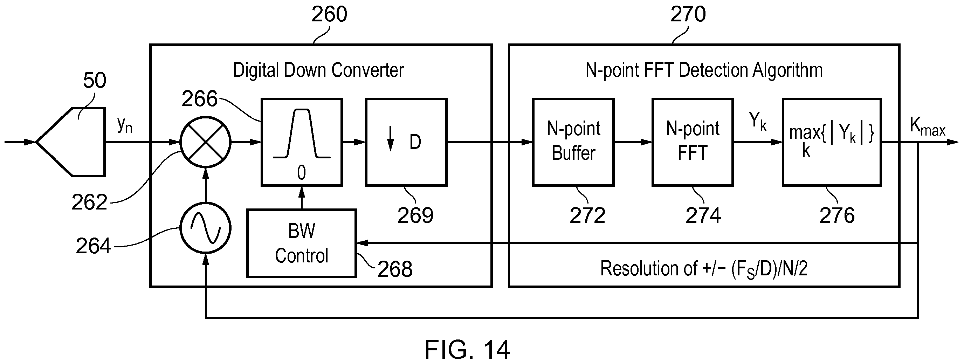

In the arrangement shown in Figure 13, the functions implemented within the signal processing system are described in terms of hardware, although it should be evident that since all the operations are being performed on digital words, the operations may be performed in dedicated hardware, or reusable/multipurpose computational engines and/or by a processor configured to execute instructions stored in non-transitory computer-readable storage. Further, several of the functional blocks described here may be performed by a single device. The output of the analog to digital converter 50 is provided to a down converter 260, and the output of the down converter 260 is provided to a spectral analysis engine 270, such as a low N point fast Fourier transform engine which may be implemented in dedicated hardware or by a processor configured to execute instructions stored in non-transitory computer-readable storage. Similarly, the down converter 260 can also be implemented in dedicated hardware or by a processor configured to execute instructions stored in non-transitory computer-readable storage. The output of the spectral analysis engine 270 is then fed back to control the operation of the digital down converter 260. The circuit of Figure 13 is shown in greater detail in Figure 14. The digital down converter 260 comprises a multiplier 262 that receives an input signal, which in this example is a digital sequence output by the analog to digital converter 50 at a sampling rate Fs to a first input of the multiplier 262. A second input of the multiplier 262 receives an oscillating signal from a digital oscillator 264. The digital oscillator 264 may be arranged to produce a digital signal having a fundamental frequency set to equal a demanded frequency determined by the spectral analysis engine 270. The output of the digital oscillator 264 may approximate a sinusoid, and in which case a calculating engine may be provided in order to synthesize the sinusoid at an appropriate frequency. The sinusoid may be represented as a complex entity. Alternatively, a reduced resolution sinusoid may be held in read only memory, and interpolation may be used in order to synthesize an appropriate sinusoid at the appropriate frequency. In a further alternative, the output of the digital oscillator 264 could simply be a square wave such that the output of the analog-to-digital converter 50 is multiplied by 1, and then by -1, in an alternating sequence having a fundamental frequency set to an appropriate demanded frequency. This approach can be used because higher order harmonics can be rejected by a filter 266 arranged to receive the output of the mixer 262.

It will become evident from the description below that the demanded frequency can match one of the bin frequencies of the FFT engine at each iteration, and hence can be estimated in advance. Consequently, action may be taken to preload one or more sequences for generating the digital sinusoid into a sinusoid memory. In any event there are several approaches known to the person skilled in the art of providing a numerically controlled oscillator.

If the digital oscillator 264 has a frequency $F_{NCO}$, then as known to the person skilled in the art, signal components are frequency shifted by $F_{NCO}$ in the down converter 260. Thus, the action of the down converter 260 is to move the frequency of the incoming signal to be centered around $F_{NCO}$. This can be exploited to implement a search of a frequency space.

As is known to the person skilled in the art, the Fast Fourier Transform (FFT) operation (and indeed frequency analysis operations in general) examine an incoming signal and allocate its components to "bins". The magnitude of a signal allocated to a bin is representative of the signal strength in the frequency range belonging to the particular bin. In principle a FFT of the incoming signal could be performed to identify the frequency of the dominant signal with a desired degree of accuracy, which can be predetermined. However this can rapidly become computationally expensive and time consuming.

It was realized that a relatively simple search could be made through a frequency space to identify a range of frequencies where the dominant signal is likely to be. For example with a 2-point Fourier transform the frequency space is divided into a top half and a bottom half. With a 3 point Fourier transform the frequency space is divided into three regions and so on. In a first iteration an entire search band is interrogated at a first resolution. The first resolution corresponds to a first "bin" width. Once a region containing a signal has been identified, which region can be regarded as a candidate region, then the search space can be reduced to cover the frequency range of at least the candidate region and preferably is centered about the mid-frequency of that candidate region or bin. In a second iteration this reduced search space is interrogated, but the number of bins used to search this reduced space remains the same. Thus the bin width is reduced - or put another way the resolution is increased. The bin containing the largest signal component is identified and becomes the center of a reduced search space for the next iteration, and so on. In order to achieve this approach a simple and robust way of defining the search space at each iteration is desired. This is achieved by the digital down converter 260 that includes a filter.

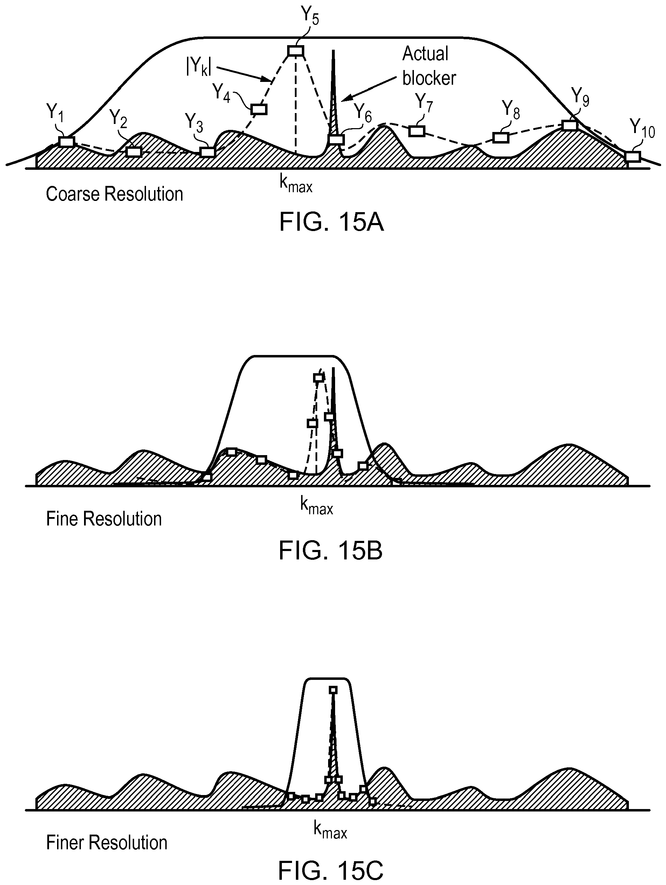

In Figure 15, the output from the mixer 262 is passed to a narrow band filter 266 which, because of the operation of the digital down converter 260, can have a single center frequency from one iteration to the next, but whose bandwidth is variable from one iteration to the next in response to bandwidth controller 268. The output of the narrow band filter 266, which is a digital filter in Figure 14, is then provided to a decimator 269 which is operable to decimate the data stream by a controllable decimation factor D. The bandwidth of the narrow band filter 266 can be controlled by the bandwidth controller 268 such that it passes the entirety of the bin selected as having the maximum magnitude in the most recently performed FFT analysis. It may also be arranged to pass a guard band disposed around the bin selected for further spectral analysis.

As a result of the down converter 260, a frequency range of interest can be down converted such that the range to be investigated in the incoming signal $Y_n$ is delivered to a known frequency space by the down converter. For example the frequency range of interest could be converted such that its lowest frequency maps to a predetermined frequency in the down converter 260, such a frequency may for example be approximately 0 Hz. Alternatively, the mid-point of the frequency range may be mapped to a predetermined frequency such as the mid-point of the narrow band filter 266. In any event, the frequency of the down converter is selected such that the frequency range of the candidate region is transformed to lie within the pass band of the filter 266.

The spectral analysis engine 270 in this example comprises an N point buffer 272 which keeps a record of the most recent N words output by the decimator 269. The output from the N point buffer 272 is provided to an N point FFT engine 274 which, as known to the person skilled in the art, divides the frequency space of interest into N bins and allocates signal strengths to each of the bins. The bins are designated $Y_K$. The outputs of N point FFT engine 274 is provided to a selector circuit 276 which, as illustrated, identifies the bin $Y_K$ having the largest signal modulus therein. Once the bin $Y_K$ having the largest signal modulus been identified, the center frequency of this bin can be calculated by the algorithm and used to set the frequency $f_{NCO}$ of the digital oscillator 264 in a subsequent iteration. As is known to the person skilled in the art, the Fourier transform can be performed in hardware, and Analog Devices, Inc. of Norwood, Massachusetts has a forty-eight point FFT engine available. Therefore providing a smaller FFT engine that works, for example, on 16, 10, 8, 4, 3 or 2 points can be implemented by one of ordinary skill in the art. Therefore the specific implementation of the FFT engine need not be discussed further.

Operation of the circuit of Figures 13 and 14 will now be described with reference to Figures 15a, 15b and 15c. For convenience 10, bins have been shown in each of these figures. It is assumed that, in a first iteration, the N point buffer is flushed, then allowed to fill with samples which have been decimated by a first decimation factor D. The first decimation factor may be unity such that every sample is passed through to the buffer until the buffer is full. Also, at the first iteration the digital oscillator 264 may not be running, and the bandwidth of the narrow band filter 266 is set to its widest bandwidth such that the entire pass band is presented to the FFT engine 274. The spectral power across the full spectrum is then allocated by the FFT engine 274 to one of a plurality of frequency buckets having center frequencies $Y_1$ to $Y_{10}$ in Figure 15a extending between a lower frequency $LF_K$ and an upper frequency $UF_K$.

Because the illustrated frequency spectrum includes not only the most significant blocker, but other signals as well, the peak signal power ought to correspond to the bin that the blocker is in, but it could also potentially correspond to an adjacent bin. Thus in Figure 15a, bin $Y_5$ is selected as the bin having the most signal power although in this graphical example the blocker nearly coincides with bin $Y_6$.

The frequency corresponding to frequency bin $Y_5$ in the first pass (K=1) is estimated and set as the new frequency for the digital oscillator 264. This has the effect of centering the narrow band filter 266 substantially around the frequency corresponding to bin $Y_5$. At this point, the bandwidth of the narrow band filter 266 may also be reduced such that it covers at least the width of bin $Y_5$ from Figure 15a. In this example the pass band of the filter encompasses the frequency range of bins $Y_4$, $Y_5$ and $Y_6$. The decimation factor may now be increased by a factor between 2 and N in order to increase the resolution of the FFT engine 274. This extra bandwidth can be considered as being as being a guard band. The width of the guard band may be selected by the user or the designer and could be reduced or expanded.

The decimation factor may be user or designer adjustable. Ideally, the decimation factor should be chosen to satisfy the Nyquist sampling criteria (sample rate greater than twice the maximum frequency) in order to avoid frequency aliasing.

As known to the person skilled in the art, the frequency resolution, Fres, of a fast Fourier transform is

$$\text{Fres} = +/-0.5 \, \frac{F_s}{N}$$

Put another way, the frequency bin size is

$$\frac{F_s}{N}$$

where $F_S$ is the sampling frequency which is ideally selected to be fast enough in order to satisfy the Nyquist sampling criteria.

Because of the action of the digital down converter 260, the frequency range of interest in each successive iteration, K, is substantially centered around direct current (DC) or the center frequency of the narrow band filter 266 (at the designer's choice) and becomes narrower and narrower. Therefore the sample rate can be reduced at each iteration, and this can be done by increasing the decimation factor. The resolution of the second iteration, as shown in Figure 3b, is

$$+/-0.5 \, \frac{F_s/D}{N}$$

The bin size decreases as D increases and hence the error between the bin center frequencies and the actual blocker frequency can also decrease. Once again the maximum value of each bin can be estimated to locate a new candidate bin and the digital down converter frequency can be adjusted to set the bin center frequency the mid-point of the pass band of the narrow band filter 266 and the bandwidth of this filter can be further reduced. Thus, as shown in Figure 15c at the third iteration, an error between the actual blocker frequency and the estimated frequency of the blocker is reduced relative to the first and second iteration, and in this instance can be regarded as falling within an acceptable error value.

It is thus possible to identify interfering or unwanted signal components, to estimate their contribution to a signal and to reduce the influence or effect of the unwanted signal.

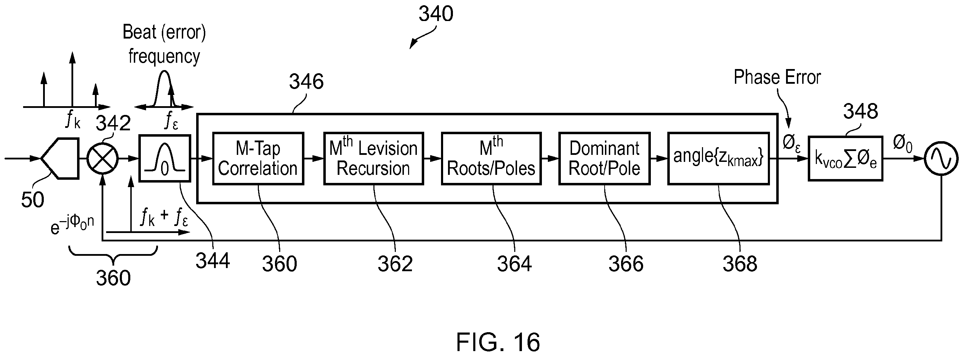

Figure 16 schematically illustrates an embodiment of a further apparatus for identifying the frequency of a blocker signal. The apparatus receives a digitized input signal, which may be received from one of the analog to digital converters, for example converter 50 as shown in Figure 1 or Figure 2. The apparatus shown in Figure 16 comprises a blocker detector 340 which, as illustrated, comprises a digital mixer 342, a digital filter 344, a parametric engine 346, a digital integrator 348, and a digitally controlled oscillator 350. The mixer 342, filter 344, integrator 348 and digital oscillator 350, may be provided as hardware components or software components that are executable by a processor, or a mixture of the two. For the purposes of the description, they will be described as if they were physical components, but it should be realized that the entirety of the features of the blocker detector 350 can be implemented by software that is executable by a processor, such as a digital baseband processor of a base station.

The parametric engine 346 may comprise several functional blocks. In the example shown in Figure 16 the parametric engine comprises 346 an M tap correlator 360 which receives a plurality of digital words that have passed through the filter 344. The M tap correlator 360 buffers the words and performs an auto-covariance or autocorrelation function on them. The output from the M tap correlator 360 is passed to a suitable processing engine, such as an Mth order Levinson recursion engine 362 of Figure 16, which may be implemented in a processor and which is operable, as will be described hereinafter, to output M positions of poles in a pole-zero S plane diagram or more strictly as we are dealing with a sampled data system, the position of poles in the Z plane. In Figure 16, this data is schematically output from an Mth poles block 364, and then examined to find the position of the dominant pole by a dominant pole block 366. The phase angle of the dominant pole can be calculated by an angle calculator 368 and output as a phase error $\varphi_e$ and provided to the integrator 348. As illustrated, the integrator 348 integrates the phase error $\varphi_e$ to obtain a phase correction signal which is provided to the digitally controlled oscillator 350 (also known as a numerically controlled oscillator) to change its frequency. The digitally controlled oscillator 350 outputs a numerical representation of a sinusoidal signal, and hence this just represents a run of numbers that represents approximations or samples of a sinusoid. This digital representation of a sinusoid can be multiplied with the digital representation of the input signal to obtain frequency mixed components exactly as would be the case had this all been done in analog circuitry. Thus the digitally controlled oscillator 350 and the digital mixer 342 can be implemented by digital circuitry. The output of the digital mixer 342 is provided to the digital filter 344 which may be provided as a finite impulse response filter or an infinite response filter as appropriate. The digital filter 344 may have an adjustable center frequency or, as is the case in this example, may be set to have its pass band centered around a particular frequency such as 0 Hz, but to have its bandwidth controllable so as to vary the bandwidth between successive iterations of the blocker detection circuit or algorithm.

Given a time sequence of data, it is possible to identify the presence of potential blockers using a parametric model. Thus given a sample of N points held in a buffer, it is possible to parameterize the response of a system that has an output that approximates the sample of N points.

In fact, the response can be modelled, for example, as an auto-regressive model. An auto-regressive model views a random signal as the output of a linear time invariant system to an input which is a white noise signal. The linear time invariant system is an all pole system.

There are known powerful mathematical techniques, such as the Yule-Walker equations, that can help relate the autoregressive model parameters to the auto-covariance (or autocorrelation) of the random process. If the process has a zero mean value, then the autocorrelation and the auto-covariance are the same.

Given data $Xm$ which represents a time sequence, it is possible to estimate the autocorrelation values for that data. Then using these values it is possible to find the linear regression parameters $\alpha_L$ for L = 1 to M where M is the order of the autoregressive model.

A problem with the Yule-Walker equations is that they give no guidance on the value of M that should be used. However, large M can be avoided due to computational overhead. There are several signal processing libraries which contain routines for quickly and robustly solving the above equations. They are available in algorithm form, and for embedding in to gate or processor logic. An example of a library that is well known in the personal computing environment is MATLAB, where the function is available using the command ARYULE.

However, the user still has to decide the order of the model.

The Yule-Walker equation can be solved relatively quickly for low values of M, but the computational cost of inverting the matrix increases rapidly with increases in M. This can be seen by comparing the complexity of inverting a 2x2 matrix and a 3x3 matrix using techniques such as elementary row operations (which is intuitive rather than formulaic) or using the technique of calculating minors, cofactors and adjugate (or adjoint) matrix, which is a deterministic four operation process (calculate matrix and minors, turn that into a matrix of cofactors, then form the adjoint matrix, and multiply by 1/determinant).

Numerical methods exist, but the computational overhead increases significantly with the order.

The Levinson algorithm can be used to solve the Yule-Walker equations recursively. The Levinson algorithm is an example of an algorithm that can efficiently extract the coefficients for an autoregressive model. The Levinson algorithm is also available in library form so can be used without an understanding of its derivation.

Other numerical techniques or algorithms may also be used, such as the Bareiss algorithm, Schur decomposition and Cholesky decomposition. Other techniques also exist.

In the context of a telecommunications system, a signal to be received may be in the presence of many signals which may interfere with the reception of a wanted signal. These other signals are often known as interfering signals, interferers, blocking signals or blockers, and as noted before it would be advantageous to know of the presence of blockers such that actions can be taken to mitigate its effect or their effects.

It might be supposed that providing a sequence of received symbols/data to a parametric engine, such as an autoregressive model, would enable the amplitude and frequency of each potential blocker to be determined.

However, the inventor realized that this assumption is unfounded due to significant computational costs of such a process.

As noted above, the computational cost with allowing a large order M within the parametric engine increases rapidly due to the operation of inverting successively large matrices. However, the inventor realized that the performance of an underspecified (low M) parametric engine could be exploited to provide computationally simple system for identifying the poles in a parametric representation of the input data stream.

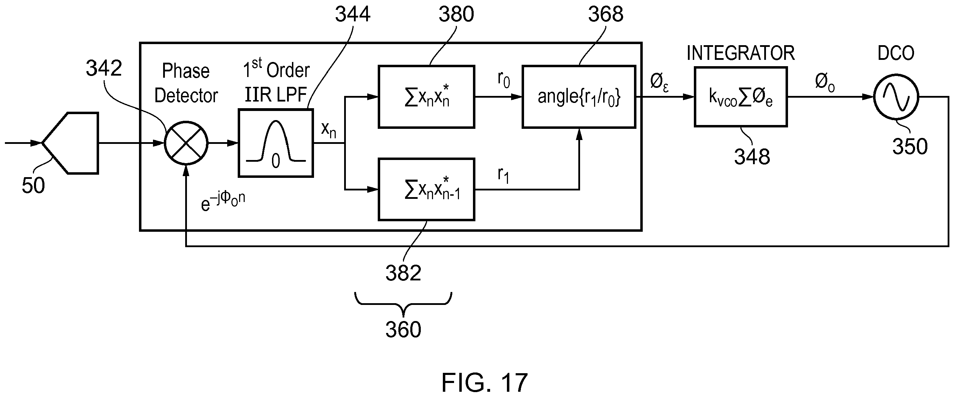

The inventor observed that if an parametric engine is constrained to have a low order, for example an order of one or two, but is asked to parameterize a system having three or more poles, then the engine tends to place its estimates of the pole position near the positions of the largest pole or poles in the input signal. Thus, although the result is not strictly correct, it is a reasonable approximation to the final result. This can be exploited to narrow down the frequency search space, (i.e. a test range) in a subsequent iteration by bandwidth limiting the input signal so that it excludes the less significant poles but includes the more significant poles. This allows the matrix inversion or other computational cost to be significantly reduced. However it is also desirable that the complexity and cost of the filter is also simplified where possible. This tends to indicate using a filter using a relatively simple band pass characteristic. Taking both these features into consideration the inventor realized that suitable performance could be achieved with a low order parametric engine, and ultimately a single order parametric engine operated in an iterative or recursive manner to search smaller frequency spaces centered around the estimated pole frequency from a preceding iteration. Parametric engines of low order but having an order greater than one can also be implemented relatively easily. An example of a single order parametric engine is shown in Figure 17 where parts which have been described with respect to Figure 16 are given like reference numerals. The correlator 360 has a first portion 380 arranged to form a complex autocorrelation $X_n X_n^*$ and a second portion 382 arranged to form the autocorrelation between the n and the conjugate of a succeeding sample n - 1, expressed as $X_n X_{n-1}^*$. The outputs are designated $r_0$ and $r_1$ of the first portion 380 and the second portion 382, respectively, and are provided to an angle determining unit 368, which can compare the ratio of $r_1$ to $r_0$ to determine an angular displacement on the phasor diagram represented by $\varphi_e$, which as described hereinbefore is provided to the integrator 348 that controls the digitally controlled oscillator 350. The circuit in Figure 17 is a single order (M=1) engine and represents a computationally simple way of providing a parametric engine to identify a blocker.

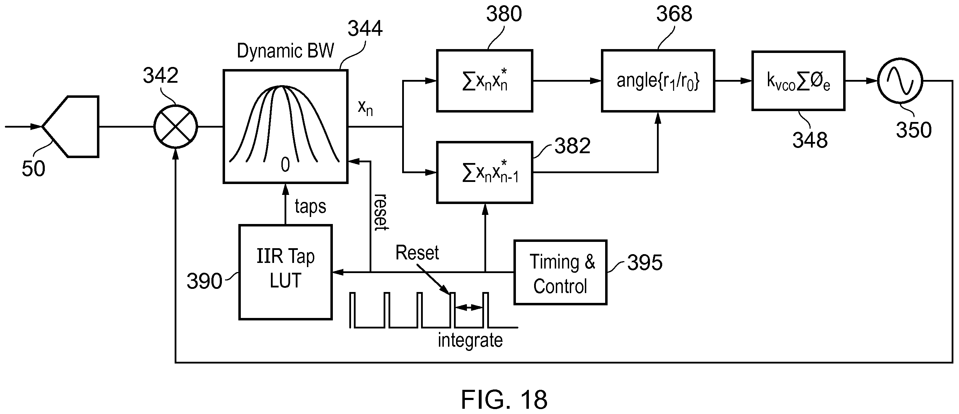

The circuit of Figure 17 is repeated in Figure 18, together with a graphical representation of the timing and reset signals provided by a timing and control circuit 395 to the correlation blocks 380 and 382, and also to a filter tap lookup table 390 which is used to address and change the tap coefficients between successive iterations of the circuit in order to progressively reduce the pass band of the filter 344 until such time as the position of the potential interfering signal with sufficient accuracy. Thus the circuit shown in Figure 18 operates to iteratively estimate the frequency of the blocker, and then use the down converter/frequency translator and filter to zoom in on the blocker and to estimate its frequency to a greater accuracy.

As noted before, single order engines are relatively easy to implement but the present disclosure in not limited to the use of first order parametric engines.

The principles and advantages described herein can be implemented in various apparatus. Examples of such apparatus can include, but are not limited to, consumer electronic products, parts of the consumer electronic products, electronic test equipment, wireless communications infrastructure such as a cellular base station, etc. Consumer electronic products can include, but are not limited to, wireless devices, a mobile phone (for example, a smart phone), a telephone, a television, a computer, a hand-held computer, a wearable computer, a tablet computer, a laptop computer, a watch, etc. Further, apparatuses can include unfinished products. The disclosed techniques are not applicable to mental steps, and are not performed within the human mind or by a human writing on a piece of paper.

Unless the context clearly requires otherwise, throughout the description and the claims, the words "comprise," "comprising," "include," "including," and the like are to be construed in an inclusive sense, as opposed to an exclusive or exhaustive sense; that is to say, in the sense of "including, but not limited to." The words "coupled" or connected", as generally used herein, refer to two or more elements that may be either directly connected, or connected by way of one or more intermediate elements. Additionally, the words "herein," "above," "below," and words of similar import, when used in this application, shall refer to this application as a whole and not to any particular portions of this application. Where the context permits, words in the Detailed Description using the singular or plural number may also include the plural or singular number, respectively. The words "or" in reference to a list of two or more items, is intended to cover all of the following interpretations of the word: any of the items in the list, all of the items in the list, and any combination of the items in the list. All numerical values provided herein are intended to include similar values within a measurement error.

Moreover, conditional language used herein, such as, among others, "can," "could," "might," "may," "e.g.," "for example," "such as" and the like, unless specifically stated otherwise, or otherwise understood within the context as used, is generally intended to convey that certain embodiments include, while other embodiments do not include, certain features, elements and/or states.

The teachings of the inventions provided herein can be applied to other systems, not necessarily the systems described above. The elements and acts of the various embodiments described above can be combined to provide further embodiments. The acts of the methods discussed herein can be performed in any order as appropriate. Moreover, the acts of the methods discussed herein can be performed serially or in parallel, as appropriate.

**Claims**

1. A signal processing apparatus for reducing the impact of an unwanted signal component on a wanted signal component, the apparatus comprising:

   an input configured to receive an input signal which comprises the wanted signal component, a blocker signal and the unwanted signal component, wherein the unwanted signal component is a harmonic of the blocker signal;
   an output configured to output an output signal;
   a first processor (102) configured to process the input signal by operating on the input signal with a function that includes a term descriptive of the unwanted signal component to create an estimated unwanted signal;
   a second processor (107) configured to: iteratively search through a signal domain of the input signal or the output signal to determine the frequency of the blocker signal; and process the estimated unwanted signal and at least one of the input signal or the output signal using the determined frequency of the blocker signal to identify one or more correction coefficients ;
   a correction signal generator (104) configured to receive the one or more correction coefficients and the estimated unwanted signal, and generate a correction signal by applying the one or more correction coefficients to the estimated unwanted signal; and
   a combiner (106) configured to combine the input signal and the correction signal to form the output signal such that the unwanted signal component in the output signal is reduced.

2. An apparatus as claimed in claim 1, in which at least one of the following apply:

   a) the first processor is configured to form the square of the input signal;
   b) the correction signal generator comprises a finite impulse response filter;
   c) the correction signal generator comprises a digital filter arranged to receive an input from the first processor;
   d) the correction signal generator and the combiner are implemented together.

3. An apparatus as claimed in claim 1 or claim 2 points b) to d), in which the unwanted signal component is or comprises a power term $x^n$ in a signal processing circuit that is connected to the apparatus, and the first processor is configured to apply the function $x^n$ to the input signal.

4. An apparatus as claimed in claim 3, in which the first processor is configured to form a polynomial expansion of the input signal.

5. An apparatus as claimed in any preceding claim, further including filters configured to select the estimated unwanted signal and at least one of a residual unwanted signal from the output or the unwanted signal in the input signal, and to provide the selected signals to the second processor.

6. An apparatus as claimed in claim 5, in which the second processor is adapted to form auto-correlation functions of the output of the first processor and cross correlations of the output of the first processor and at least one of the input signal or the output signal as part of the correction coefficient identification

7. An apparatus as claimed in claim 1, in which the second processor includes one of an N point FFT engine where N<8 and N is a positive integer; and N point FFT engine where N is less than or equal to 4; and a parametric engine.

8. An integrated circuit including an apparatus as claimed in any preceding claim.

9. A radio receiver or a mobile telephony base station including an apparatus as claimed in any preceding claim.

10. An apparatus as claimed in any preceding claim in which the input signal comprises a sequence of digital words, and the processing performed by the apparatus is performed by digital electronics, or a mixture of digital electronics and a processor configured to execute instructions stored in non-transitory computer storage.

11. An apparatus as claimed in any preceding claim, wherein the second processor further comprises a tunable filter or a filter and frequency converter combination configured to select a frequency range for analysis in a successive iteration.

12. An apparatus as claimed in claim 6 or any claim dependent on claim 6, in which at least one of the following apply:

   a) the second processor is further arranged to receive estimates of the unwanted signal and the input or the output signal that have been frequency converted and narrowband filtered, and to apply a frequency translation vector to the filtered signals;
   b) the autocorrelation and cross correlation functions are performed in hardware and the correction coefficient estimation is performed in software.

13. A method of reducing an unwanted signal component within an output signal, the method comprising:

   Receiving, at an input, an input signal comprising a wanted signal component, a blocker signal and an unwanted signal component, wherein the unwanted signal component is a harmonic of the blocker signal;
   using a first processor (102), operating on the input signal to form an estimate of the unwanted signal component with a function that includes a term descriptive of the unwanted signal component;
   using a second processor (107), iteratively searching through a signal domain of the input signal or the output signal to determine the frequency of the blocker signal, and identifying one or more correction coefficients by processing the estimated unwanted signal and at least one of the input signal or the output signal using the determined frequency of the blocker signal
   generating, using a correction signal generator (104), a correction signal by applying the one or more correction coefficients to the estimated unwanted signal;
   combining, using a combiner (106), the correction signal with the input signal to form the output signal; and
   monitoring the output signal to refine the correction signal so as to reduce the unwanted signal component in the output signal.

14. A method as claimed in claim 13, in which the method further comprises identifying the frequency of the blocker signal so as to estimate a frequency of the unwanted signal.

**Patentansprüche**

1. Signalverarbeitungsvorrichtung zum Verringern der Auswirkung einer unerwünschten Signalkomponente auf eine erwünschte Signalkomponente, wobei die Vorrichtung Folgendes umfasst:

   einen Eingang, der konfiguriert ist, ein Eingangssignal zu empfangen, das die erwünschte Signalkomponente, ein Blockierersignal und die unerwünschte Signalkomponente umfasst, wobei die unerwünschte Signalkomponente eine Oberschwingung des Blockierersignals ist;
   einen Ausgang, der konfiguriert ist, ein Ausgangssignal auszugeben;
   einen ersten Prozessor (102), der konfiguriert ist, das Eingangssignal durch Arbeiten am Eingangssignal mit einer Funktion, die einen Ausdruck enthält, der die unerwünschte Signalkomponente beschreibt, zu verarbeiten, um ein geschätztes unerwünschtes Signal zu erstellen;
   einen zweiten Prozessor (107), der konfiguriert ist, durch eine Signaldomäne des Eingangssignals oder des Ausgangssignals iterativ zu suchen, um die Frequenz des Blockierersignals zu bestimmen; und das geschätzte unerwünschte Signal und das Eingangssignal und/oder das Ausgangssignal unter Verwendung der bestimmten Frequenz des Blockierersignals zu verarbeiten, um einen oder mehrere Korrekturkoeffizienten zu identifizieren;
   einen Korrektursignalgenerator (104), der konfiguriert ist, den einen oder die mehreren Korrekturkoeffizienten und das geschätzte unerwünschte Signal zu empfangen und durch Anwenden des einen oder der mehreren Korrekturkoeffizienten auf das geschätzte unerwünschte Signal ein Korrektursignal zu erzeugen; und

einen Kombinierer (106), der konfiguriert ist, das Eingangssignal und das Korrektursignal zu kombinieren, um das Ausgangssignal derart zu bilden, dass die unerwünschte Signalkomponente im Ausgangssignal verringert wird.

2. Vorrichtung nach Anspruch 1, wobei Folgendes gilt:

   a) der erste Prozessor ist konfiguriert, das Quadrat des Eingangssignals zu bilden, und/oder
   b) der Korrektursignalgenerator umfasst ein Filter mit endlicher Impulsantwort und/oder
   c) der Korrektursignalgenerator umfasst ein digitales Filter, das ausgelegt ist, eine Eingabe vom ersten Prozessor zu empfangen, und/oder
   d) der Korrektursignalgenerator und der Kombinierer sind gemeinsam implementiert.

3. Vorrichtung nach Anspruch 1 oder Anspruch 2, Punkte b) bis d), wobei die unerwünschte Signalkomponente ein Potenzausdruck $x^n$ in einer mit der Vorrichtung verbundenen Signalverarbeitungsschaltung ist oder diesen umfasst und der erste Prozessor konfiguriert ist, die Funktion $x^n$ auf das Eingangssignal anzuwenden.

4. Vorrichtung nach Anspruch 3, wobei der erste Prozessor konfiguriert ist, eine Polynomentwicklung des Eingangssignals zu bilden.

5. Vorrichtung nach einem vorhergehenden Anspruch, die ferner Filter enthält, die konfiguriert sind, das geschätzte unerwünschte Signal und ein unerwünschtes Restsignal aus der Ausgabe und/oder das unerwünschte Signal im Eingangssignal zu wählen und die gewählten Signale dem zweiten Prozessor zuzuführen.

6. Vorrichtung nach Anspruch 5, wobei der zweite Prozessor ausgelegt ist, als Teil der Korrekturkoeffizientenidentifizierung Autokorrelationsfunktionen der Ausgabe des ersten Prozessors und Kreuzkorrelationen der Ausgabe des ersten Prozessors und des Eingangssignals und/oder des Ausgangssignals zu bilden.

7. Vorrichtung nach Anspruch 1, wobei der zweite Prozessor eine N-Punkt-FFT-Maschine, wobei N < 8 und N eine positive ganze Zahl ist, oder eine N-Punkt-FFT-Maschine, wobei N kleiner als oder gleich 4 ist, und eine parametrische Maschine enthält.

8. Integrierte Schaltung, die ein Vorrichtung nach einem vorhergehenden Anspruch enthält.

9. Funkempfänger oder Mobiltelefoniebasisstation, die eine Vorrichtung nach einem vorhergehenden Anspruch enthält.

10. Vorrichtung nach einem vorhergehenden Anspruch, wobei das Eingangssignal eine Folge digitaler Wörter umfasst und die Verarbeitung, die durch die Vorrichtung durchgeführt wird, durch digitale Elektronik oder eine Mischung digitaler Elektronik und eines Prozessors, der konfiguriert ist, Anweisungen auszuführen, die in einem nichttransitorischen Computerspeicher gespeichert sind, durchgeführt wird.

11. Vorrichtung nach einem vorhergehenden Anspruch, wobei der zweite Prozessor ferner ein abstimmbares Filter oder eine Filter- und Frequenzumsetzer-Kombination umfasst, das oder die konfiguriert ist, einen Frequenzbereich zur Analyse in einer aufeinanderfolgenden Wiederholung zu wählen.

12. Vorrichtung nach Anspruch 6 oder einem Anspruch, der von Anspruch 6 abhängt, wobei Folgendes gilt:

   a) der zweite Prozessor ist ferner ausgelegt, Schätzungen des unerwünschten Signals und das Eingangs- oder das Ausgangssignal, die frequenzumgesetzt und schmalbandgefiltert wurden, zu empfangen und einen Frequenzverschiebungsvektor auf die gefilterten Signale anzuwenden; und/oder
   b) die Autokorrelations- und Kreuzkorrelationsfunktionen werden in Hardware durchgeführt und die Korrekturkoeffizientenschätzung wird in Software durchgeführt.

13. Verfahren zum Verringern einer unerwünschten Signalkomponente in einem Ausgangssignal, wobei das Verfahren Folgendes umfasst:

   Empfangen an einem Eingang eines Eingangssignals, das eine erwünschte Signalkomponente, ein Blockiersignal und eine unerwünschte Signalkomponente umfasst, wobei die unerwünschte Signalkomponente eine

Oberschwingung des Blockiersignals ist;

Arbeiten am Eingangssignal unter Verwendung eines ersten Prozessors (102), um eine Schätzung der unerwünschten Signalkomponente mit einer Funktion, die einen Ausdruck enthält, der die unerwünschte Signalkomponente beschreibt, zu bilden;

iteratives Suchen unter Verwendung eines zweiten Prozessors (107) durch eine Signaldomäne des Eingangssignals oder des Ausgangssignals, um die Frequenz des Blockiersignals zu bestimmen, und Identifizieren eines oder mehrerer Korrekturkoeffizienten durch Verarbeiten des geschätzten unerwünschten Signals und des Eingangssignals und/oder des Ausgangssignals unter Verwendung der bestimmten Frequenz des Blockiersignals;

Erzeugen unter Verwendung des Korrektursignalgenerators (104) eines Korrektursignals durch Anwenden eines oder mehrerer Korrekturkoeffizienten auf das geschätzte unerwünschte Signal;

Kombinieren unter Verwendung eines Kombinierers (106) des Korrektursignals mit dem Eingangssignal, um das Ausgangssignal zu bilden; und

Überwachen des Ausgangssignals, um das Korrektursignal weiterzuentwickeln, um die unerwünschte Signalkomponente im Ausgangssignal zu verringern.

**14.** Verfahren nach Anspruch 13, wobei das Verfahren ferner ein Identifizieren der Frequenz des Blockiersignals umfasst, um eine Frequenz des unerwünschten Signals zu schätzen.

## Revendications

**1.** Appareil de traitement de signal pour réduire l'impact d'une composante de signal non voulue sur une composante de signal voulue, l'appareil comprenant :

une entrée configurée pour recevoir un signal d'entrée qui comprend la composante de signal voulue, un signal de blocage et la composante de signal non voulue, dans lequel la composante de signal non voulue est un harmonique du signal de blocage ;

une sortie configurée pour délivrer en sortie un signal de sortie ;

un premier processeur (102) configuré pour traiter le signal d'entrée en agissant sur le signal d'entrée avec une fonction qui comprend un terme descriptif de la composante de signal non voulue pour créer un signal non voulu estimé ;

un second processeur (107) configuré pour : rechercher de manière itérative à travers un domaine de signal du signal d'entrée ou du signal de sortie pour déterminer la fréquence du signal bloquant ; et traiter le signal non voulu estimé et au moins l'un du signal d'entrée ou du signal de sortie en utilisant la fréquence déterminée du signal de blocage pour identifier un ou plusieurs coefficients de correction ;

un générateur de signal de correction (104) configuré pour recevoir les un ou plusieurs coefficients de correction et le signal non voulu estimé, et générer un signal de correction en appliquant les un ou plusieurs coefficients de correction au signal non voulu estimé ; et

un combineur (106) configuré pour combiner le signal d'entrée et le signal de correction pour former le signal de sortie de telle sorte que la composante de signal non voulue dans le signal de sortie est réduite.

**2.** Appareil selon la revendication 1, dans lequel au moins l'un des points suivants s'applique :

a) le premier processeur est configuré pour former le carré du signal d'entrée ;

b) le générateur de signal de correction comprend un filtre de réponse impulsionnelle finie ;

c) le générateur de signal de correction comprend un filtre numérique agencé pour recevoir une entrée à partir du premier processeur ;

d) le générateur de signal de correction et le combineur sont implémentés ensemble.

**3.** Appareil selon la revendication 1 ou la revendication 2, points b) à d), dans lequel la composante de signal non voulue est ou comprend un terme de puissance $x^n$ dans un circuit de traitement de signal qui est connecté à l'appareil, et le premier processeur est configuré pour appliquer la fonction $x^n$ au signal d'entrée.

**4.** Appareil selon la revendication 3, dans lequel le premier processeur est configuré pour former une expansion polynomiale du signal d'entrée.

**5.** Appareil selon l'une quelconque des revendications précédentes, comprenant en outre des filtres configurés pour sélectionner le signal non voulu estimé et au moins l'un d'un signal non voulu résiduel à partir de la sortie ou du signal non voulu dans le signal d'entrée, et pour fournir les signaux sélectionnés au second processeur.

6. Appareil selon la revendication 5, dans lequel le second processeur est adapté pour former des fonctions d'autocorrélation de la sortie du premier processeur et des corrélations croisées de la sortie du premier processeur et d'au moins l'un du signal d'entrée ou du signal de sortie en tant que partie de l'identification de coefficient de correction.

7. Appareil selon la revendication 1, dans lequel le second processeur comprend l'un d'un moteur FFT à N points où N < 8 et N est un entier positif ; et un moteur FFT à N points où N est inférieur ou égal à 4 ; et un moteur paramétrique.

8. Circuit intégré comprenant un appareil selon l'une quelconque des revendications précédentes.

9. Récepteur radio ou station de base de téléphonie mobile comprenant un appareil selon l'une quelconque des revendications précédentes.

10. Appareil selon l'une quelconque des revendications précédentes, dans lequel le signal d'entrée comprend une séquence de mots numériques, et le traitement effectué par l'appareil est effectué par de l'électronique numérique, ou un mélange d'électronique numérique et d'un processeur configuré pour exécuter des instructions stockées dans un support de stockage informatique non transitoire.

11. Appareil selon l'une quelconque des revendications précédentes, dans lequel le second processeur comprend en outre un filtre syntonisable ou une combinaison de filtre et de convertisseur de fréquence configuré(e) pour sélectionner une plage de fréquences pour une analyse dans une itération successive.

12. Appareil selon la revendication 6 ou toute revendication dépendant de la revendication 6, dans lequel au moins l'un des points suivants s'applique :

a) le second processeur est en outre agencé pour recevoir des estimations du signal non voulu et du signal d'entrée ou de sortie qui ont été convertis en fréquence et filtrés en bande étroite, et pour appliquer un vecteur de translation de fréquence aux signaux filtrés ;
b) les fonctions d'autocorrélation et de corrélation croisée sont exécutées dans le matériel et l'estimation du coefficient de correction est effectuée dans le logiciel.

13. Méthode de réduction d'une composante de signal non voulue dans un signal de sortie, la méthode comprenant les étapes consistant à :

réceptionner, au niveau d'une entrée, un signal d'entrée comprenant une composante de signal voulue, un signal de blocage et une composante de signal non voulue, dans laquelle la composante de signal non voulue est un harmonique du signal de blocage ;
utiliser un premier processeur (102), agissant sur le signal d'entrée pour former une estimation de la composante de signal non voulue avec une fonction qui comprend un terme descriptif de la composante de signal non voulue ;
utiliser un second processeur (107), recherchant de manière itérative à travers un domaine de signal du signal d'entrée ou du signal de sortie pour déterminer la fréquence du signal de blocage, et identifier un ou plusieurs coefficients de correction en traitant le signal non voulu estimé et au moins l'un du signal d'entrée ou du signal de sortie utilisant la fréquence déterminée du signal de blocage,
générer, en utilisant un générateur de signal de correction (104), un signal de correction en appliquant les un ou plusieurs coefficients de correction au signal non voulu estimé ;
combiner, en utilisant un combineur (106), le signal de correction avec le signal d'entrée pour former le signal de sortie ; et
surveiller le signal de sortie pour affiner le signal de correction afin de réduire la composante de signal non voulue dans le signal de sortie.

14. Méthode selon la revendication 13, dans laquelle la méthode comprend en outre une identification de la fréquence du signal de blocage de façon à estimer une fréquence du signal non voulu.

FIG. 1

FIG. 2

FIG. 3

FIG. 4

$x + a_2x^2$

$z = x + (a_2 - \hat{a}_2)x^2 - 2a_2\hat{a}_2x^3 - a_2^2\hat{a}_2^2x^4$

HD2     HD3     HD4

residual     Out of Band     Below the noise floor

Image band HD3

HD3 @ $f_0$

Residual HD2

Noise ~ -100dBc

$-3f_0$     $f_0$     $2f_0$     $4f_0$

HD2 $a_2$ Coefficient Estimation

$\hat{a}_2$

$()^2$

FIG. 5

FIG. 6

EP 2 930 854 B1

FIG. 7

FIG. 8

FIG. 9

FIG. 10

EP 2 930 854 B1

EP 2 930 854 B1

$r = [r_0 \ r_1 \ ... \ r_M]$

$c = [c_0 \ c_1 \ ... \ c_M]$

1x(M+1) complex
Auto correlation Vector

1x(M+1) complex
Cross correlation
Vector

Correlation
Engine

$( \ )^2$

$( \ )^2$

$r$    $c$

180

$r^H$

$c^H$

162

Matrix, Vector
Build

M+1 complex scalar
multiplications

$\begin{bmatrix} 1 \\ e^{-j2\omega_0} \\ \vdots \\ e^{-j2M\omega_0} \end{bmatrix}$

conj( )

190

$R_0$    $c_0$

$182 \quad r_0 = \begin{bmatrix} r_0^* \\ r_1^* e^{-j2\omega_0} \\ \vdots \\ r_M^* e^{-j2M\omega_0} \end{bmatrix}$

Frequency
Translation

$c_0 = \begin{bmatrix} c_0 \\ c_1 e^{-j2\omega_0} \\ \vdots \\ c_M e^{-j2M\omega_0} \end{bmatrix}$

Least Squares
Engine

Symmetric Toeplitz
Matrix Build

(M+1)x 1
complex vector

(M+1)x(M+1) complex Toeplitz Matrix $R_0$
With (M+1) M/2+1 unique entries

$184 \quad r_0 = \begin{bmatrix} r_0^* & r_1^* e^{-j2\omega_0} & \cdots & r_M^* e^{-jM\omega_0} \\ r_1 e^{j2\omega_0} & r_0^* & \cdots & r_M^* e^{-j2(M-1)\omega_0} \\ r_2 e^{j4\omega_0} & r_3 e^{j6\omega_0} & \ddots & \vdots \\ r_M e^{j2M\omega_0} & r_M e^{j2(M-1)\omega_0} & \cdots & r_0^* \end{bmatrix}$

FIG. 11

$$\theta_{LS} = \theta_{old} + \mu\{R_o + \lambda I\}^{-1}c_o$$

Correlation Engine

r          c

Matrix, Vector Build

$R_o$          $c_o$

Least Squares Engine          $\theta_{old}$

$\theta_{LS}$

FIG. 12

50

260

270

$y_n$

Digital
Down
Converter

Low N-pt
FFT
Detection

$f_{NCO}$

FIG. 13

FIG. 14

Coarse Resolution

FIG. 15A

Fine Resolution

FIG. 15B

Finer Resolution

FIG. 15C

FIG. 16

FIG. 17

EP 2 930 854 B1

FIG. 18

EP 2 930 854 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02093807 A1
- US 20080093015 A1
- US 20090086864 A1
- US 51744714